# EUROPEAN PATENT SPECIFICATION

(11) **EP 2 345 230 B1**
(45) Date of publication and mention of the grant of the patent: **07.11.2018**
(21) Application number: 09785801.3
(22) Date of filing: 05.02.2009
(51) Int. Cl.: H04L 12/24, H04L 29/12

(54) **METHOD AND APPARATUS FOR ALLOCATING NETWORK RESOURCES FROM ONE ADDRESS REALM TO CLIENTS IN A DIFFERENT ADDRESS REALM**
VERFAHREN UND VORRICHTUNG ZUM VERGEBEN VON NETZWERKBETRIEBSMITTELN AUS EINEM ADRESSENBEREICH AN CLIENTS IN EINEM ANDEREN ADRESSENBEREICH
PROCÉDÉ ET DISPOSITIF D'ALLOCATION DE RESSOURCES RÉSEAU D'UN DOMAINE D'ADRESSAGE À DES CLIENTS DANS UN DOMAINE D'ADRESSAGE DIFFÉRENT

(30) Priority: 07.10.2008 US 103439 P
(43) Date of publication of application: 20.07.2011
(73) Proprietor: Telefonaktiebolaget LM Ericsson (publ), 164 83 Stockholm (SE)
(72) Inventor: HAMMAM, Tarik, 164 48 Kista (SE); FRANZEN, Anders, 142 65 Trängsund (SE); HOLMQVIST, Matthias, 131 65 Nacka (SE)
(74) Representative: Brann AB
(86) International application number: PCT/IB2009/000212
(87) International publication number: WO 2010/041104

(56) References cited:
- US-A1- 2003 153 324
- US-B1- 6 957 276
- EDITORS: M BORELLA COMMWORKS J LO CANDLESTICK NETWORKS CONTRIBUTORS: D GRABELSKY COMMWORKS G MONTENEGRO SUN MICROSYSTEMS: "Realm Specific IP: Framework; rfc3102.txt" IETF STANDARD, INTERNET ENGINEERING TASK FORCE, IETF, CH, 1 October 2001 (2001-10-01), XP015008883 ISSN: 0000-0003

## Description

### TECHNICAL FIELD

The present invention relates to the field of communications. More specifically, the aspects of the invention relate to gateways that allocate network resources to clients.

### BACKGROUND

Network Address Translation (NAT) has become a popular mechanism of enabling the separation of addressing realms. A NAT router must examine and change the network layer, and possibly the transport layer, header of each packet crossing the addressing realms that the NAT router is connecting. This causes the mechanism of NAT to violate the end-to-end nature of Internet connectivity, and disrupts protocols requiring or enforcing end-to-end integrity of packets.

An alternative to NAT is Realm Specific IP (RSIP) (see Request For Comment (RFC) 3102). RSIP is based on the concept of granting a client from one address realm a presence in another address realm by allowing the client to use network resources (e.g., network addresses, port numbers and/or other routing parameters) from the second address realm. An RSIP server replaces the NAT router, and RSIP-aware client on the private network are referred to as RSIP clients. RSIP requires ability of the RSIP server to grant such resources to RSIP clients.

RSIP allows a degree of address realm transparency to be achieved between two differently-scoped, or completely different address realms. This makes it a useful architecture for enabling end-to-end packet transparency between address realms. RSIP is expected to be deployed on privately addressed IPv4 networks and used to grant access to publicly addressed IPv4 networks. However, in place of the private IPv4 network, there may be an IPv6 network, or a non-IP network. Thus, RSIP allows IP connectivity to client on a host with an IP stack and IP applications but no native IP access. As such, RSIP can be used, in conjunction with DNS and tunneling, to bridge IPv4 and IPv6 networks, such that dual-stack hosts can communicate with local or remote IPv4 or IPv6 hosts.

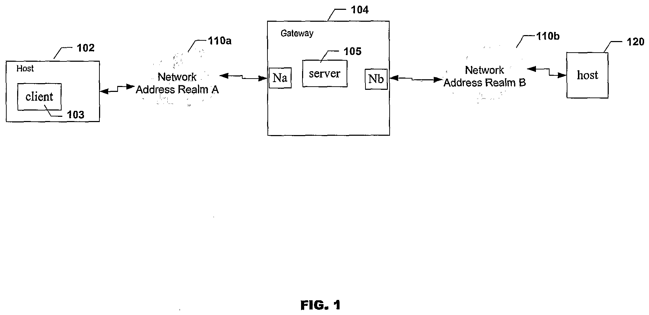

Referring now to FIG. 1, in a typical scenario in which RSIP may be deployed, there is at least one client host 102 connected to a network 110a having one address realm (realm A), another client host 120 connected to a network 110b having a different address realm (realm B), and a gateway 104 that is connected to both networks 110a and 110b. As illustrated, hosts 102 and 120 belong to different address realms A and B, respectively. Gateway 104 has two interfaces: (1) Na on address realm A, and (2) Nb on address realm B. Executing on gateway 104 is an RSIP server 105 that has a pool of addresses in address realm B that it can allocate to or lend to a client 103 on client host 102 and other clients on other hosts in address realm A. These addresses can be denoted as Nb1, Nb2, Nb3 and so on.

As is often the case, hosts within address realm A are likely to use private addresses while gateway 104 is multi-homed with one or more private addresses from address realm A in addition to its public addresses from address realm B. Thus, we typically refer to the realm in which client host 102 resides as "private" and the realm from which client host 102 borrows addressing parameters as the "public" realm. However, these realms may both be public or private. Moreover, address realm A may be an IPv6 realm or a non-IP address realm.

Client 103, wishing to establish an end-to-end connection to a client on client host 120 situated within address realm B, first negotiates and obtains assignment of public resources (e.g., addresses and other routing parameters of address realm B) from server 105. Upon allocation of these public resources, server 105 creates a mapping, referred to as a "bind", of client 103's private addressing information and the allocated resources. Such a bind enables gateway 104 to correctly forward inbound traffic generated by client host 120 for client 103. According to the RSIP recommendation, a lease time should be associated with each bind.

Using the public resources allocated by server 105, client 103 tunnels data packets across network 110a to server 105. Server 105 acts as the end point of such tunnels, stripping off the outer headers and routing the inner packets onto the public realm (i.e., network 110b in the example shown in FIG. 1). As mentioned above, server 105 maps the public parameters allocated to client 103 to the private address used by client 103. When a packet from the public realm arrives at gateway 104 and it matches a bind, then server 105 will tunnel it to the appropriate host.

The RSIP RFC defines two basic flavors of RSIP: (1) RSA-IP and (2) RSAP-IP. When using RSA-IP, an RSIP server maintains a pool of available network addresses (e.g., IP addresses) to be leased by RSIP clients. Upon request, the RSIP server allocates an address to the client. Once an address is allocated to a particular client, only that client may use the address until the address is returned to the pool. Clients should not use addresses that have not been specifically allocated to them. The client may use any layer four address (e.g., TCP/UDP port) in combination with their allocated layer three (i.e., network) address.

When using RSAP-IP, an RSIP gateway maintains a pool of layer three and layer four addresses (e.g., IP addresses as well as pools of port numbers per address). RSIP hosts lease an IP address and one or more ports to use with it. Once an address/port tuple has been allocated to a particular client, only that client should use the tuple until it is returned to a pool. Clients should not use address/port combinations that have not been specifically allocated to them.

As mentioned above, RSIP recommends that each bind should be associated with a lease time. A short lease time is usually a prerequisite for efficient IP address and port resource utilization. However, such short lease times make the RSIP scheme vulnerable to disruptions in the communication link between the private hosts and the gateways.

It is possible that a failure in 110a may occur such that client 103 is not able to communicate with server 105 for some period of time. What is desired, therefore, are systems and methods handling such situations.

US-B1-6 957 276 discloses a system and method for providing centralized address management of static IP addresses through the dynamic host control protocol. A server determines that a client should relinquish a resource. Thereafter, if detecting that the client can not communicate with the server, a timer is set, after expiry of which the resource is set to be available.

US 2003/153324 A1 discloses a method and apparatus for conserving home agent resources in mobile IP deployment. The document discloses granting a resource to a client and setting an INACTIVITY TIMER immediately after granting the resource. In response to the expiration of the INACTIVITY TIMER it is determined whether the client is unable to communicate with the server. By configuring the server to send a series of ICMP echo request messages to the client it may be determined whether the client is able to communicate with the server. If the client does not respond to any of the ICMP echo request messages, then the client is deemed to be unable to communicate with the server, and, as a result, the resource allocated to the client is immediately reclaimed.

### SUMMARY

The present invention provides a method and a gateway server apparatus as set out in the appended independent claims. The appended dependent claims concern particular embodiments of the invention.

The above and other aspects and embodiments are described below with reference to the accompanying drawings.

### BRIEF DESCRIPTION OF THE DRAWINGS

The accompanying drawings, which are incorporated herein and form part of the specification, illustrate various embodiments of the present invention and, together with the description, further serve to explain the principles of the invention and to enable a person skilled in the pertinent art to make and use the invention. In the drawings, like reference numbers indicate identical or functionally similar elements.
FIG. 1 illustrates a communication system.
FIG. 2 illustrates a communication system according to an embodiment of the invention.
FIG. 3 is a flow chart illustrating a process according to an embodiment of the invention.
FIG. 4 is a flow chart illustrating a process according to an embodiment of the invention.
FIG. 5 is a flow chart illustrating a process according to an embodiment of the invention.
FIG. 6. is a functional block diagram of a gateway according to some embodiments of the invention.

### DETAILED DESCRIPTION

As used herein, the term "gateway" should be construed broadly to encompass not only gateways but also other like devices, such a routers.

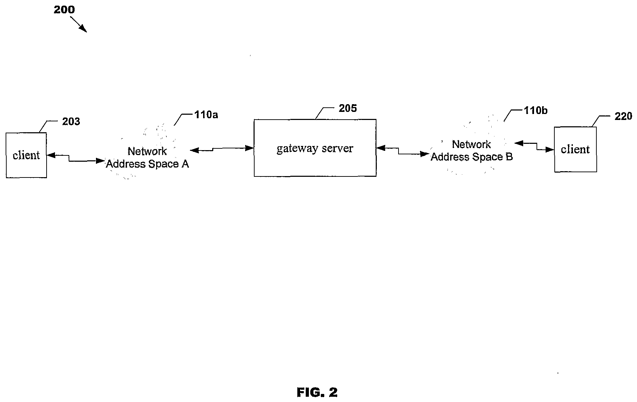

Referring now to FIG. 2, FIG. 2 is a functional block diagram illustrating a system 200 according to an embodiment of the invention. As shown in FIG. 2, system 200 includes a gateway server 205. As illustrated in FIG. 2, gateway server 205 belongs to both address realm A and address realm B. The gateway server 205 is configured to allocate network resources from address realm B to client 203 (e.g., an RSIP client), which belongs to address realm A. Client 203 may use the allocated network resource to communicate with a remote client 220. Gateway server 205 may be an RSIP server or may be similar to an RSIP server. A network resource may consist of a single network address (e.g., an Internet Protocol (IP) address) or a plurality of network address. In some embodiments, a network resource consists of a set of one or more network addresses and a set of one or more port numbers.

As discussed above, because short lease times are typically used in the RSIP scheme, the RSIP scheme is vulnerable to disruptions in the communication link between client 203 and the gateway server 205. Accordingly, in some embodiments, gateway server 205 is configured such that, for at least one bind (a.k.a., resource allocation), no lease time is associated with the bind. That is, the bind is "perpetual" or "permanent" until the client for which the bind was created relinquishes the allocated resources. However, a problem with creating a perpetual bind for client 203 may occur when there is a lengthy disruption to the communication channel between the client and the gateway server. In this scenario, it would be advantageous to return the resources allocated to the client to a pool of available resources.

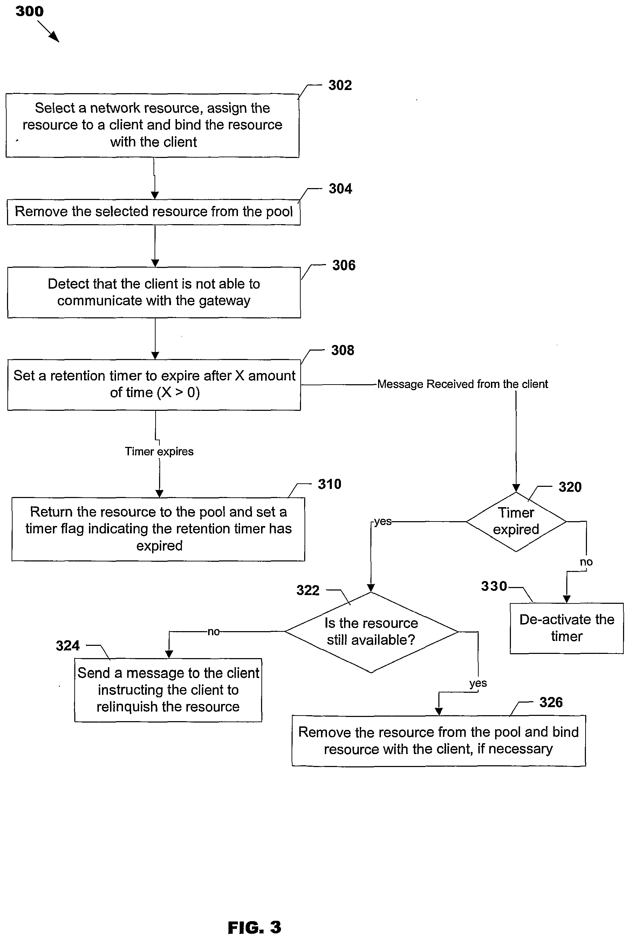

Accordingly, in some embodiments, gateway server 205 is configured to perform process 300 (see FIG. 3). Referring now to FIG. 3, process 300 may begin in step 302 where gateway server 205 selects a network resource (e.g., an IP address or a tuple consisting of an IP address and port number) from address realm B from a pool of available network resources from address realm B, assigns the selected network resource to client 203, which is in address realm A, and creates a bind for the assignment (i.e., maps the allocated resource to an identifier associated with client 203). Step 302 may be preformed in response to gateway server 205 receiving from client 203 a request for a network resource from address realm B.

In step 304, the allocated network resource is "removed" from the pool (e.g., a data structure may be updated to indicate that the allocated resource is no longer available) .

In step 306, gateway server 205 detects that client 203 is not able to communicate with gateway server 205 (e.g., gateway server 205 detects a disruption in a communication channel or network that enabled client 203 to communicate with gateway server 205).

In response, gateway server 205 "sets" a retention timer (Tr) (step 308) to expire after some predetermined amount of time (e.g., 1 minute or less). In some embodiments, gateway server 205 sets the retention timer merely by recording the current time. Additionally, in step 308, gateway server 205 may undo the bind created in step 302 (e.g., gateway server 205 may remove from a data structure, such as a table, the information that mapped the allocated network resource to the identifier associated with the client).

When the timer expires, process 300 proceeds to step 310. The timer expires when the predetermined amount of time has elapsed. Accordingly, in the embodiment where gateway server 205 sets the timer merely by recording the current time, gateway server 205 may periodically determine the current time to check whether the predetermined amount of time has elapsed since the timer was set.

In step 310, gateway server 205 returns to the pool the network resource selected and allocated in step 302 and may set a timer flag indicating that the timer has expired.

If, after performing step 308, gateway server 205 receives from client 203 a message containing the network resource that was allocated to client 203 in step 302, then process 300 proceeds to step 320.

In step 320, gateway server 205 determines whether the retention timer has expired (e.g., gateway server 205 checks the status of the timer flag). If the timer has expired, process 300 proceeds to step 322, otherwise it proceeds to step 330, where gateway server 205 deactivates the retention timer.

In step 322, gateway determines whether the network resource is in the pool of available network resources (e.g., the network resource has not been allocated to another client). If the network resource is not in the pool, then gateway server 205 transmits a message to client 203 that causes client 203 to relinquish the network resource (e.g., the message may cause client 203 to perform an automatic re-start or re-boot) (step 324). If it is in the pool, then gateway server 205 removes the network resource from the pool (step 326). Additionally, in step 326, gateway server 205 may bind the network resource to client 203. After step 326, client 203 continues as before the occurrence of the disruption of the communication channel.

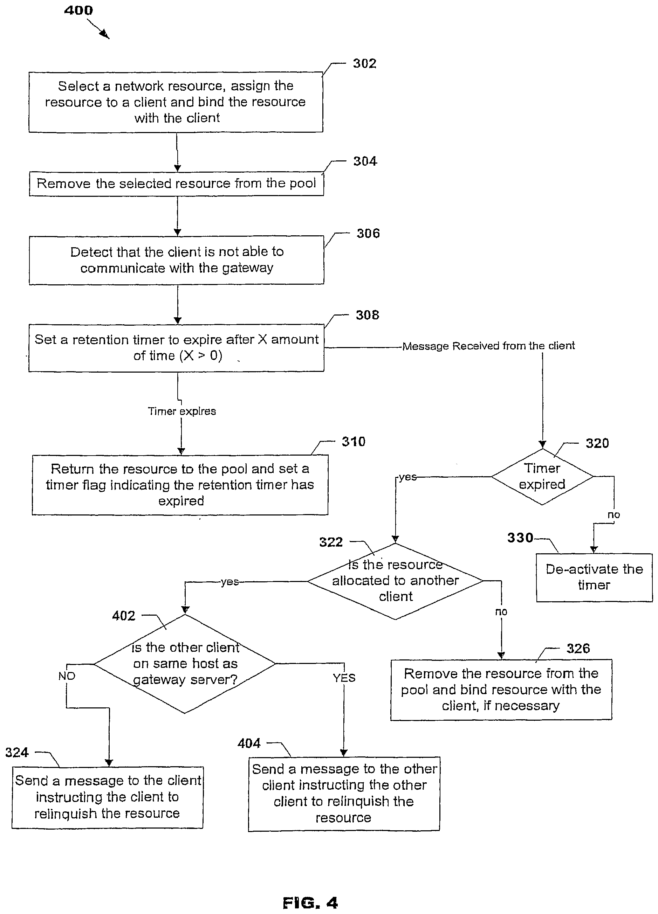

Referring now to FIG. 4, FIG. 4 is a flow chart illustrating a process 400, according to embodiments of the invention, that may be performed by gateway server 205. Process 400 is identical to process 300 with the exception that after determining, in step 322, that the network resource has been allocated to another client and is, thus, no longer available, step 402 is performed. In step 402, gateway server 205 determines whether the other client to which the network resource has been allocated is executing on the host on which gateway server 205 is executing. If the other client and gateway server 205 are not executing on the same host, then step 324 is performed, otherwise step 404 is performed. In step 404, gateway server 205 transmits a message to the other client that causes the other client to relinquish the network resource (e.g., the message may cause the other client to perform an automatic re-start or re-boot of the host).

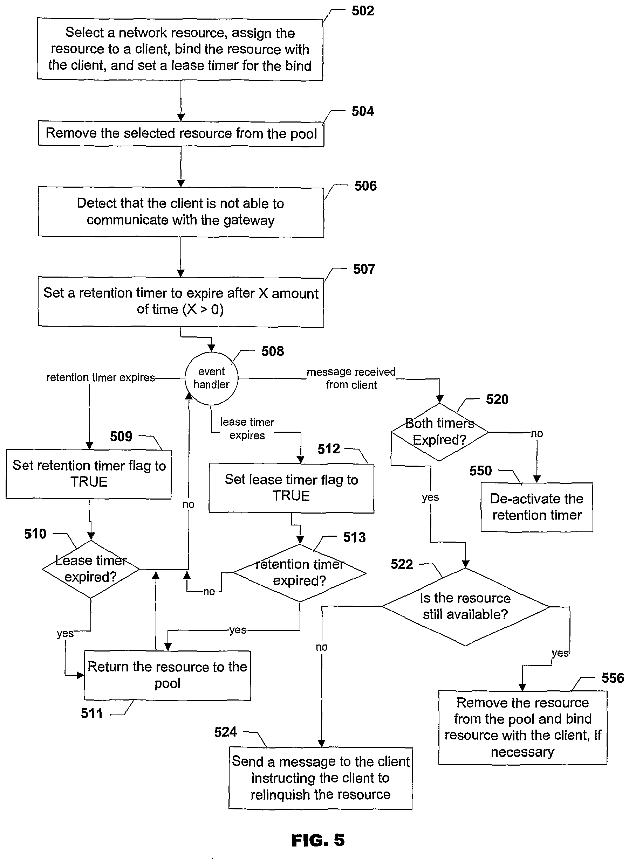

Referring now to FIG. 5, FIG. 5 is a flow chart illustrating a process 500, according to embodiments of the invention, that may be performed by gateway server 205. Process 500 assumes that a network resource allocated to client 203 is associated with a lease timer.

Process 500 may begin in step 502 where gateway server 205 selects a network resource from address realm B from a pool of such available network resources, assigns the selected network resource to client 203, creates a bind for the assignment (i.e., maps the allocated resource to an identifier associated with client 203), and sets a lease timer associated with the bind to expire after some predetermined amount of time. Step 502 may be preformed in response to gateway server 205 receiving from client 203 a request for a network resource from address realm B. In step 504, the allocated resource is "removed" from the pool (e.g., a data structure may be updated to indicate that the allocated resource is no longer available).

In step 506, gateway server 205 detects that client 203 is not able to communicate with gateway server 205 (e.g., gateway server 205 detects a disruption in a communication channel or network that enabled client 203 to communicate with gateway server 205).

In response, gateway server 205 sets a retention timer (Tr) (step 507) to expire after a predetermined amount of time. Additionally, in step 507, gateway server 205 may undo the bind created in step 502 (e.g., gateway server 205 may remove from a data structure, such as a table, the information that mapped the allocated resource to the identifier associated with the client). After step 507, control may be passed to an event handler 508.

When the retention timer expires, process 500 proceeds to step 509. In step 509, gateway sets a retention timer flag indicating that the retention timer has expired. In step 510, gateway server 205 determines whether the lease timer has expired. If it has expired, process 500 proceeds to step 511. In step 511, gateway server 205 returns to the pool the network resource selected and allocated in step 502.

When the lease timer expires, process 500 proceeds to step 512. In step 512, gateway sets a lease timer flag indicating that the lease timer has expired. In step 513, gateway server 205 determines whether the retention timer has expired (e.g., gateway server 205 checks status of the retention timer flag). If it has expired, process 500 proceeds to step 511.

If after performing step 507 gateway server 205 receives from client 203 a message containing the network resource that was allocated to client 203 in step 502, then process 500 proceeds to step 520.

In step 520, gateway server 205 determines whether both the retention timer and lease timer have expired (e.g., gateway server 205 checks the status of the timer flags). If the timers have expired, process 500 proceeds to step 522, otherwise it proceeds to step 530, where gateway server 205 deactivates the retention timer.

In step 522, gateway server 205 determines whether the resource selected and allocated in step 502 is in the pool of available resources (e.g., the resource has not been allocated to another client). If the resource is not in the pool, then gateway server 205 transmits a message to client 203 that causes client 203 to relinquish the resource (e.g., the message may cause client 203 to perform an automatic re-start or re-boot) (step 524). If it is in the pool, then gateway server 205 removes the resource from the pool (step 556). Additionally, in step 556, gateway server 205 may bind the resource to client 203. After step 556, client 203 continues as before the occurrence of the disruption of the communication channel.

In some embodiments, after determining, in step 522, that the resource has been allocated to another client, gateway server 205 determines whether the other client to which the resource has been allocated is executing on the host on which gateway server 205 is executing. If the other client and gateway server 205 are not executing on the same host, then step 524 is performed, otherwise gateway server 205 transmits a message to the other client that causes the other client to relinquish the resource (e.g., the message may cause the other client to perform an automatic re-start or re-boot of the host).

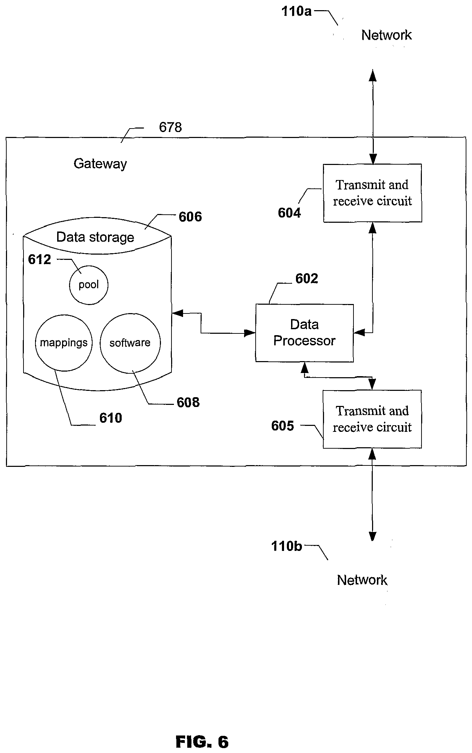

Referring now to FIG. 6, FIG. 6 is a functional block diagram of a gateway 678 according to some embodiments of the invention. In general, gateway 678 may comprise a processing system 602 (e.g., one or more microprocessors), a data storage system 606 (e.g., one or more non-volatile storage devices) and computer software 608 stored in storage system 606. Information 612 identifying a pool of available network resources (e.g., IP addresses and port numbers) and/or mapping information 610 that maps allocated resources to clients may also be stored by data storage system 606. Gateway 678 may comprise a first network interface 604 (e.g., transmit/receive (Tx/Rx) circuitry) for transmitting data to and receiving data from network 110a and a second network interface 605 (transmit/receive (Tx/Rx) circuitry) for transmitting data to and receiving data from network 110b.

Software 608 is configured such that when processing system 602 executes software 608, gateway 678 performs steps described above (e.g., steps described above with reference to the flow charts shown in FIGs. 3-5). That is software 608 implements the functionality of gateway server 205

For example software 608 may include: computer instructions for allocating a network resource to a client; computer instructions for detecting that the client is not able to communicate with the gateway; computer instructions for setting a retention timer in response to detecting that the client is not able to communicate with the gateway; computer instructions for receiving a message from the client; computer instructions for determining whether the retention timer has expired in response to receiving the message; and computer instructions for determining whether the network resource is available in response to determining that the retention timer has expired.

The above described embodiments improve resiliency handling. Thus, greater network robustness and in-service-performance can be achieved.

## Claims

1. A method performed by a gateway server (205) belonging to a first address realm (110a) and a second address realm (110b), the method comprising:
receiving, from a first client (203) belonging to the first address realm (110a), a first request for a network resource from the second address realm (110b);
allocating (302) a first network resource from the second address realm (110b) to the first client (203), in response to the first request;
detecting (306) that the first client (203) is not able to communicate with the gateway server (205);
in response to detecting (306) that the first client (203) is not able to communicate with the gateway server (205), setting (308) a first retention timer, wherein the first retention timer is associated with the first client (203);
detecting the expiration of the first retention timer if the first retention timer has not been deactivated;
after detecting the expiration of the first retention timer, adding (310) the first network resource to a set of available network resources: and **characterised by**:
if a message containing the first network resource is received from the first client (203) after setting (308) the first retention timer, determining (320) whether the first retention timer has expired;
in response to determining that the first retention timer has expired, determining (322) whether the first network resource is available; and
if the first network resource is available, allocating (326) the first network resource to the first client (203).

2. The method of claim 1, further comprising:
if the first network resource is not available, sending (324) a message to the first client (203) instructing the first client (203) to relinquish the first network resource.

3. The method of claims 1 or 2, further comprising:
receiving, from a second client belonging to the first address realm (110a), a second request for a network resource from the second address realm (110b);
allocating (302) a second network resource from the second address realm (110b) to the second client in response to the second request;
detecting (306) that the second client is not able to communicate with the gateway server (205);
in response to detecting (306) that the second client is not able to communicate with the gateway server (205), setting (308) a second retention timer, wherein the second retention timer is associated with the second client;
detecting the expiration of the second retention timer if the second retention timer has not been deactivated; and
after detecting the expiration of the second retention timer, adding the second network resource to the set of available network resources.

4. The method of any one of claims 1-2, wherein the step of determining (322) whether the first network resource is available comprises determining (322) whether the first network resource has been allocated to another client.

5. The method of claim 4, further comprising causing (324) the first client (203) to relinquish the first network resource in response to determining that the first network resource has been allocated to the other client.

6. The method of claim 5, wherein the step of causing the first client (203) to relinquish the first network resource comprises causing the first client (203) to initiate an automatic restart or reboot.

7. The method of claim 4, further comprising causing (404) the other client to relinquish the network resource in response to determining i) that the first network resource has been allocated to the other client and ii) that the other client is executing on a host on which the gateway server (205) is executing.

8. The method of claim 4, further comprising causing (324) the first client (203) to relinquish the network resource in response to determining i) that the first network resource has been allocated to the other client and ii) that the other client is not executing on a host on which the gateway server (205) is executing.

9. A gateway server apparatus capable of belonging to a first address realm (110a) and a second address realm (110b), the gateway server apparatus comprising:
a data storage system that stores computer software; and
a data processing system for executing the computer software, wherein the computer software comprises:
a) computer instructions for receiving a first request transmitted from a first client (203) belonging to the first address realm (110a) for a first network resource from the second address realm (110b);
b) computer instructions for allocating (302) the first network resource from the second address realm (110b) to the first client (203) in response to the request;
c) computer instructions for detecting (306) that the first client (203) is not able to communicate with the gateway server apparatus;
d) computer instructions for setting (308) a first retention timer in response to detecting (306) that the first client (203) is not able to communicate with the gateway server apparatus;
e) computer instructions for detecting the expiration of the first retention timer if the first retention timer has not been deactivated;
f) computer instructions for adding (310) the first network resource to a set of available resources after detecting the expiration of the first retention timer;
**characterised by**:
g) computer instructions for receiving a message, containing the first network resource, from the first client (203), after setting (308) the first retention timer;
h) computer instructions for determining (320) whether the first retention timer has expired in response to receiving the message from the first client (203);
i) computer instructions for determining (322) whether the first network resource is available in response to determining that the first retention timer has expired; and
j) computer instructions for allocating (326) the first network resource to the first client (203) if the first network resource is available.

10. The gateway server apparatus of claim 9, wherein the computer software further comprises computer instructions for: sending (324) a message to the first client (203) instructing the first client (203) to relinquish the first network resource, if the first network resource is not available.

11. The gateway server apparatus of claims 9 or 10, wherein the computer software further comprises:
computer instructions for receiving a second request transmitted from a second client belonging to the first address realm (110a) for a network resource from the second address realm (110b);
computer instructions for allocating (302) a second network resource from the second address realm (110b) to the second client in response to the second request;
computer instructions for detecting (306) that the second client is not able to communicate with the gateway server apparatus;
computer instructions for setting (308) a second retention timer in response to detecting (306) that the second client is not able to communicate with the gateway server apparatus;
computer instructions for detecting the expiration of the second retention timer; and
computer instructions for adding the second network resource to the set of available network resources in response to detecting the expiration of the second retention timer.

12. The gateway server apparatus of any one of claims 9-10, wherein the computer instructions for determining (322) whether the first network resource is available comprise computer instructions for determining (322) whether the first network resource has been allocated to another client in response to the reception, at the gateway server apparatus, of the message transmitted from the first client (203), after the first retention timer was set.

13. The gateway server apparatus of claim 12, wherein the computer software further comprises computer instructions for causing (324) the first client (203) to relinquish the first network resource, wherein said computer instructions for causing the first client (203) to relinquish the first network resource are executed in response to a determination that the first network resource has been allocated to the other client.

14. The gateway server apparatus of claim 13, wherein the computer instructions for causing the first client (203) to relinquish the network resource comprises computer instructions for causing the first client (203) to initiate an automatic restart or reboot.

15. The gateway server apparatus of claim 12, wherein the computer software further comprises computer instructions for causing (404) the other client to relinquish the network resource in response to a determination that i) the first network resource has been allocated to the other client and ii) the other client is executing on the gateway server apparatus.

## Patentansprüche

1. Verfahren, das von einem Gateway-Server (205) durchgeführt wird, der einem ersten Adressbereich (110a) und einem zweiten Adressbereich (110b) angehört, wobei das Verfahren folgendes umfasst:
Empfangen einer ersten Anforderung nach einer Netzwerk-Ressource aus dem zweiten Adressbereich (110b) von einem ersten Klienten (203), der dem ersten Adressbereich (110a) angehört;
Zuweisen (302) einer ersten Netzwerk-Ressource aus dem zweiten Adressbereich (110b) an den ersten Klienten (203) als Antwort auf die erste Anforderung;
Nachweisen (306), dass der erste Klient (203) nicht in der Lage ist, mit dem Gateway-Server (205) zu kommunizieren;
als Antwort auf das Nachweisen (306), dass der erste Klient (203) nicht in der Lage ist, mit dem Gateway-Server (205) zu kommunizieren, Stellen (308) eines ersten Retentionszeitgebers, wobei der erste Retentionszeitgeber mit dem ersten Klienten (203) assoziiert ist;
Nachweisen des Ablaufs des ersten Retentionszeitgebers, wenn der erste Retentionszeitgeber nicht deaktiviert worden ist;
nach dem Nachweisen des Ablaufs des ersten Retentionszeitgebers, Hinzufügen (310) der ersten Netzwerk-Ressource zu einem Satz von verfügbaren Netzwerk-Ressourcen; und **dadurch gekennzeichnet, dass**:
wenn eine Meldung, welche die erste Netzwerk-Ressource beinhaltet, nach dem Stellen (308) des ersten Retentionszeitgebers vom ersten Klienten (203) eingeht, Feststellen (320) ob der erste Retentionszeitgeber abgelaufen ist;
als Antwort auf das Feststellen, dass der erste Retentionszeitgeber abgelaufen ist, Feststellen (322) ob die erste Netzwerk-Ressource verfügbar ist; und
wenn die erste Netzwerk-Ressource verfügbar ist, Zuweisen (326) der ersten Netzwerk-Ressource an den ersten Klienten (203).

2. Verfahren gemäß Patentanspruch 1, ferner umfassend:
wenn die erste Netzwerk-Ressource nicht verfügbar ist, Senden (324) einer Meldung an den ersten Klienten (203), die den ersten Klienten (203) anweist, die erste Netzwerk-Ressource freizugeben.

3. Verfahren gemäß Patentanspruch 1 oder 2, ferner umfassend:
Empfangen einer zweiten Anforderung nach einer Netzwerk-Ressource aus dem zweiten Adressbereich (110b) von einem zweiten Klienten, der dem ersten Adressbereich (110a) angehört;
Zuweisen (302) einer zweiten Netzwerk-Ressource aus dem zweiten Adressbereich (110b) an den zweiten Klienten als Antwort auf die zweite Anforderung;
Nachweisen (306), dass der zweite Klient (203) nicht in der Lage ist, mit dem Gateway-Server (205) zu kommunizieren;
als Antwort auf das Nachweisen (306), dass der zweite Klient nicht in der Lage ist, mit dem Gateway-Server (205) zu kommunizieren, Stellen (308) eines zweiten Retentionszeitgebers, wobei der zweite Retentionszeitgeber mit dem zweiten Klienten assoziiert ist;
Nachweisen des Ablaufs des zweiten Retentionszeitgebers, wenn der zweite Retentionszeitgeber nicht deaktiviert worden ist; und
nach dem Nachweisen des Ablaufs des zweiten Retentionszeitgebers, Hinzufügen der zweiten Netzwerk-Ressource zu dem Satz von verfügbaren Netzwerk-Ressourcen.

4. Verfahren gemäß einem der Patentansprüche 1-2, wobei der Schritt des Feststellens (322), ob die erste Netzwerk-Ressource verfügbar ist, folgendes umfasst:
Feststellen (322) ob die erste Netzwerk-Ressource einem anderen Klienten zugewiesen worden ist.

5. Verfahren gemäß Patentanspruch 4, ferner umfassend:
Veranlassen (324), dass der erste Klient (203) die erste Netzwerk-Ressource freigibt als Antwort auf das Feststellen, dass die erste Netzwerk-Ressource dem anderen Klienten zugewiesen worden ist.

6. Verfahren gemäß Patentanspruch 5, wobei der Schritt des Veranlassens, dass der erste Klient (203) die erste Netzwerk-Ressource freigibt, beinhaltet, dass der erste Klient (203) veranlasst wird, einen automatischen Neustart oder automatisches Rebooten einzuleiten.

7. Verfahren gemäß Patentanspruch 4, ferner umfassend:
Veranlassen (404), dass der andere Klient die Netzwerk-Ressource freigibt als Antwort auf das Feststellen,
i) dass die erste Netzwerk-Ressource dem anderen Klienten zugewiesen worden ist, und
ii) dass der andere Klient auf einem Host-Computer arbeitet, auf dem der Gateway-Server (205) arbeitet.

8. Verfahren gemäß Patentanspruch 4, ferner umfassend:
Veranlassen (324), dass der erste Klient (203) die Netzwerk-Ressource freigibt als Antwort auf die Feststellung,
i) dass die erste Netzwerk-Ressource dem anderen Klienten zugewiesen worden ist, und
ii) dass der andere Klient nicht auf einem Host-Computer arbeitet, auf dem der Gateway-Server (205) arbeitet.

9. Gateway-Server-Vorrichtung mit der Fähigkeit, einem ersten Adressbereich (110a) und einem zweiten Adressbereich (110b) anzugehören, wobei die Gateway-Server-Vorrichtung folgendes umfasst:
ein Datenspeichersystem zum Speichern von Computer-Software; und
ein Datenverarbeitungssystem zum Ausführen der Computer-Software, wobei die Computer-Software folgendes umfasst:
a) Computer-Anweisungen zum en einer ersten Anforderung, die von einem ersten Klienten (203), der dem ersten Adressbereich (110a) angehört, übertragen wurde, nach einer ersten Netzwerk-Ressource aus dem zweiten Adressbereich (110b);
b) Computer-Anweisungen zum Zuweisen (302) der ersten Netzwerk-Ressource aus dem zweiten Adressbereich (110b) an den ersten Klienten (203) als Antwort auf die Anforderung;
c) Computer-Anweisungen zum Nachweisen (306), dass der erste Klient (203) nicht in der Lage ist, mit der Gateway-Server-Vorrichtung zu kommunizieren;
d) Computer-Anweisungen zum Stellen (308) eines ersten Retentionszeitgebers als Antwort auf das Nachweisen (306), dass der erste Klient (203) nicht in der Lage ist, mit dem Gateway-Server (205) zu kommunizieren;
e) Computer-Anweisungen zum Nachweisen des Ablaufs des ersten Retentionszeitgebers, wenn der erste Retentionszeitgeber nicht deaktiviert worden ist;
f) Computer-Anweisungen zum Hinzufügen (310) der ersten Netzwerk-Ressource zu einem Satz von verfügbaren Netzwerk-Ressourcen nach dem Nachweisen des Ablaufs des ersten Retentionszeitgebers; **gekennzeichnet durch**:
g) Computer-Anweisungen zum Empfangen einer Meldung vom ersten Klienten (203), welche die erste Netzwerk-Ressource beinhaltet, nach dem Stellen (308) des ersten Retentionszeitgebers;
h) Computer-Anweisungen zum Feststellen (320) ob der erste Retentionszeitgeber abgelaufen ist, als Antwort auf das Empfangen der Meldung vom ersten Klienten (203);
i) Computer-Anweisungen zum Feststellen (322) ob die erste Netzwerk-Ressource verfügbar ist, als Antwort auf die Feststellung, dass der erste Retentionszeitgeber abgelaufen ist; und
j) Computer-Anweisungen zum Zuweisen (326) der ersten Netzwerk-Ressource an den ersten Klienten (203), wenn die erste Netzwerk-Ressource verfügbar ist.

10. Gateway-Server-Vorrichtung gemäß Patentanspruch 9, wobei die Computer-Software ferner Computer-Anweisungen beinhaltet zum: Übertragen (324) einer Meldung an den ersten Klienten (203), die den ersten Klienten (203) anweist, die erste Netzwerk-Ressource freizugeben, wenn die erste Netzwerk-Ressource nicht verfügbar ist.

11. Gateway-Server-Vorrichtung gemäß Patentanspruch 9 oder 10, wobei die Computer-Software ferner folgendes umfasst:
Computer-Anweisungen zum Empfangen einer zweiten Anforderung nach einer Netzwerk-Ressource aus dem zweiten Adressbereich (110b), die von einem zweiten Klienten übertragen wurde, der dem ersten Adressbereich (110a) angehört;
Computer-Anweisungen zum Zuweisen (302) einer zweiten Netzwerk-Ressource aus dem zweiten Adressbereich (110b) an den zweiten Klienten als Antwort auf die zweite Anforderung;
Computer-Anweisungen zum Nachweisen (306), dass der zweite Klient nicht in der Lage ist, mit der Gateway-Server-Vorrichtung zu kommunizieren;
Computer-Anweisungen zum Stellen (308) eines zweiten Retentionszeitgebers als Antwort auf das Nachweisen (306), dass der zweite Klient nicht in der Lage ist, mit der Gateway-Server-Vorrichtung zu kommunizieren;
Computer-Anweisungen zum Nachweisen des Ablaufs des zweiten Retentionszeitgebers; und
Computer-Anweisungen zum Hinzufügen der zweiten Netzwerk-Ressource zu dem Satz von verfügbaren Netzwerk-Ressourcen als Antwort auf das Nachweisen des Ablaufs des zweiten Retentionszeitgebers.

12. Gateway-Server-Vorrichtung gemäß einem der Patentansprüche 9-10, wobei die Computer-Anweisungen zum Feststellen (322) ob die erste Netzwerk-Ressource verfügbar ist, Computer-Anweisungen beinhalten zum Feststellen (322) ob die erste Netzwerk-Ressource als Antwort auf den Empfang an der Gateway-Server-Vorrichtung der Meldung, die vom ersten Klienten (203) übertragen wurde, nachdem der erste Retentionszeitgeber gestellt wurde, einem anderen Klienten zugewiesen worden ist.

13. Gateway-Server-Vorrichtung gemäß Patentanspruch 12, wobei die Computer-Software ferner Computer-Anweisungen beinhaltet zum Veranlassen (324), dass der erste Klient (203) die erste Netzwerk-Ressource freigibt, wobei die Computer-Anweisungen zum Veranlassen, dass der erste Klient (203) die erste Netzwerk-Ressource freigibt, als Antwort auf eine Feststellung, dass die erste Netzwerk-Ressource dem anderen Klienten zugewiesen worden ist, ausgeführt werden.

14. Gateway-Server-Vorrichtung gemäß Patentanspruch 13, wobei die Computer-Anweisungen zum Veranlassen, dass der erste Klient (203) die Netzwerk-Ressource freigibt, Computer-Anweisungen umfassen zum Veranlassen, dass der erste Klient (203) einen automatischen Neustart oder automatisches Rebooten einleitet.

15. Gateway-Server-Vorrichtung gemäß Patentanspruch 12, wobei die Computer-Software ferner folgende Computer-Anweisungen beinhaltet zum Veranlassen (404), dass der andere Klient die Netzwerk-Ressource freigibt als Antwort auf ein Feststellen, dass
i) die erste Netzwerk-Ressource dem anderen Klienten zugewiesen worden ist, und
ii) der andere Klient auf der Gateway-Server-Vorrichtung ausführt.

## Revendications

1. Procédé réalisé par un serveur de passerelle (205) appartenant à un premier domaine d'adressage (110a) et à un second domaine d'adressage (110b), le procédé comprenant :
la réception, à partir d'un premier client (203) appartenant au premier domaine d'adressage (110a), d'une première demande de ressource en réseau en provenance du second domaine d'adressage (110b) ;
l'allocation (302) d'une première ressource en réseau en provenance du second domaine d'adressage (110b) au premier client (203), en réponse à la première demande ;
la détection (306) que le premier client (203) n'est pas en mesure de communiquer avec le serveur de passerelle (205) ;
en réponse à la détection (306) que le premier client (203) n'est pas en mesure de communiquer avec le serveur de passerelle (205), le réglage (308) d'un premier temporisateur de rétention, dans lequel le premier temporisateur de rétention est associé au premier client (203) ;
la détection de l'expiration du premier temporisateur de rétention si le premier temporisateur de rétention n'a pas été désactivé ;
après la détection de l'expiration du premier temporisateur de rétention, l'ajout (310) de la première ressource en réseau à un ensemble de ressources en réseau disponibles ; et **caractérisé par** :
si un message contenant la première ressource en réseau est reçu en provenance du premier client (203) après le réglage (308) du premier temporisateur de rétention, le fait de déterminer (320) si oui ou non le premier temporisateur de rétention a expiré ;
en réponse au fait de déterminer que le premier temporisateur de rétention a expiré, le fait de déterminer (322) si oui ou non la première ressource en réseau est disponible ; et
si la première ressource en réseau est disponible, l'allocation (326) de la première ressource en réseau au premier client (203).

2. Procédé selon la revendication 1, comprenant en outre :
si la première ressource en réseau n'est pas disponible, l'envoi (324) d'un message au premier client (203) enjoignant au premier client (203) d'abandonner la première ressource en réseau.

3. Procédé selon les revendications 1 ou 2, comprenant en outre :
la réception, à partir d'un second client appartenant au premier domaine d'adressage (110a), d'une seconde demande de ressource en réseau en provenance du second domaine d'adressage (110b) ;
l'allocation (302) d'une seconde ressource en réseau en provenance du second domaine d'adressage (110b) au second client en réponse à la seconde demande ;
la détection (306) que le second client n'est pas en mesure de communiquer avec le serveur de passerelle (205) ;
en réponse à la détection (306) que le second client n'est pas en mesure de communiquer avec le serveur de passerelle (205), le réglage (308) d'un second temporisateur de rétention, dans lequel le second temporisateur de rétention est associé au second client ;
la détection de l'expiration du second temporisateur de rétention si le second temporisateur de rétention n'a pas été désactivé ; et
après la détection de l'expiration du second temporisateur de rétention, l'ajout de la seconde ressource en réseau à l'ensemble de ressources en réseau disponibles.

4. Procédé selon l'une quelconque des revendications 1 à 2, dans lequel l'étape consistant à déterminer (322) si oui ou non la première ressource en réseau est disponible comprend le fait de déterminer (322) si oui ou non la première ressource en réseau a été allouée à un autre client.

5. Procédé selon la revendication 4, comprenant en outre le fait d'amener (324) le premier client (203) à abandonner la première ressource en réseau en réponse à la détermination que la première ressource en réseau a été allouée à l'autre client.

6. Procédé selon la revendication 5, dans lequel l'étape consistant à amener le premier client (203) à abandonner la première ressource en réseau comprend le fait d'amener le premier client (203) à initier un redémarrage ou une relance automatique.

7. Procédé selon la revendication 4, comprenant en outre le fait d'amener (404) l'autre client à abandonner la ressource en réseau en réponse à la détermination i) que la première ressource en réseau a été allouée à l'autre client et ii) que l'autre client est en train de s'exécuter sur un hôte sur lequel le serveur de passerelle (205) est en train de s'exécuter.

8. Procédé selon la revendication 4, comprenant en outre le fait d'amener (324) le premier client (203) à abandonner la ressource en réseau en réponse à la détermination i) que la première ressource en réseau a été allouée à l'autre client et ii) que l'autre client n'est pas en train de s'exécuter sur un hôte sur lequel le serveur de passerelle (205) est en train de s'exécuter.

9. Appareil de serveur de passerelle capable d'appartenir à un premier domaine d'adressage (110a) et à un second domaine d'adressage (110b), l'appareil de serveur de passerelle comprenant :
un système de stockage de données qui stocke un logiciel informatique ; et
un système de traitement de données pour exécuter le logiciel informatique, dans lequel le logiciel informatique comprend :
a) des instructions informatiques pour recevoir une première demande transmise à partir d'un premier client (203) appartenant au premier domaine d'adressage (110a) pour une première ressource en réseau en provenance du second domaine d'adressage (110b) ;
b) des instructions informatiques pour allouer (302) la première ressource en réseau en provenance du second domaine d'adressage (110b) au premier client (203) en réponse à la demande ;
c) des instructions informatiques pour détecter (306) que le premier client (203) n'est pas en mesure de communiquer avec l'appareil de serveur de passerelle ;
d) des instructions informatiques pour régler (308) un premier temporisateur de rétention en réponse à la détection (306) que le premier client (203) n'est pas en mesure de communiquer avec l'appareil de serveur de passerelle ;
e) des instructions informatiques pour détecter l'expiration du premier temporisateur de rétention si le premier temporisateur de rétention n'a pas été désactivé ;
f) des instructions informatiques pour ajouter (310) la première ressource en réseau à un ensemble de ressources disponibles après la détection de l'expiration du premier temporisateur de rétention ;
**caractérisé par**
g) des instructions informatiques pour recevoir un message, contenant la première ressource en réseau, en provenance du premier client (203), après le réglage du premier temporisateur de rétention ;
h) des instructions informatiques pour déterminer (320) si oui ou non le premier temporisateur de rétention a expiré en réponse à la réception du message en provenance du premier client (203) ;
i) des instructions informatiques pour déterminer (322) si oui ou non la première ressource en réseau est disponible en réponse à la détermination que le premier temporisateur de rétention a expiré ; et
j) des instructions informatiques pour allouer (326) la première ressource en réseau au premier client (203) si la première ressource en réseau est disponible.

10. Appareil de serveur de passerelle selon la revendication 9, dans lequel le logiciel informatique comprend en outre des instructions informatiques pour : envoyer (324) un message au premier client (203) enjoignant au premier client (203) d'abandonner la première ressource en réseau, si la première ressource en réseau n'est pas disponible.

11. Appareil de serveur de passerelle selon les revendications 9 ou 10, dans lequel le logiciel informatique comprend en outre :
des instructions informatiques pour recevoir une seconde demande transmise à partir d'un second client appartenant au premier domaine d'adressage (110a) pour une ressource en réseau en provenance du second domaine d'adressage (110b) ;
des instructions informatiques pour allouer (302) une seconde ressource en réseau à partir du second domaine d'adressage (110b) au second client en réponse à la seconde demande ;
des instructions informatiques pour détecter (306) que le second client n'est pas en mesure de communiquer avec l'appareil de serveur de passerelle ;
des instructions informatiques pour régler (308) un second temporisateur de rétention en réponse à la détection (306) que le second client n'est pas en mesure de communiquer avec l'appareil de serveur de passerelle ;
des instructions informatiques pour détecter l'expiration du second temporisateur de rétention ; et
des instructions informatiques pour ajouter la seconde ressource en réseau à l'ensemble de ressources en réseau disponibles en réponse à la détection de l'expiration du second temporisateur de rétention.

12. Appareil de serveur de passerelle selon l'une quelconque des revendications 9 à 10, dans lequel les instructions informatiques pour déterminer (322) si oui ou non la première ressource en réseau est disponible comprennent des instructions informatiques pour déterminer (322) si oui ou non la première ressource en réseau a été allouée à un autre client en réponse à la réception, au niveau de l'appareil de serveur de passerelle, du message transmis à partir du premier client (203), après que le premier temporisateur de rétention a été réglé.

13. Appareil de serveur de passerelle selon la revendication 12, dans lequel le logiciel informatique comprend en outre des instructions informatiques pour amener (324) le premier client (203) à abandonner la première ressource en réseau, dans lequel lesdites instructions informatiques pour amener le premier client (203) à abandonner la première ressource en réseau sont exécutées en réponse à une détermination que la première ressource en réseau a été allouée à l'autre client.

14. Appareil de serveur de passerelle selon la revendication 13, dans lequel les instructions informatiques pour amener le premier client (203) à abandonner la ressource en réseau comprennent des instructions informatiques pour amener le premier client (203) à initier un redémarrage ou une relance automatique.

15. Appareil de serveur de passerelle selon la revendication 12, dans lequel le logiciel informatique comprend en outre des instructions informatiques pour amener (404) l'autre client à abandonner la ressource en réseau en réponse à une détermination que i) la première ressource en réseau a été allouée à l'autre client et ii) l'autre client est en train de s'exécuter sur l'appareil de serveur de passerelle.
